# EUROPÄISCHE PATENTANMELDUNG

(11) **EP 0 801 975 A1**
(43) Veröffentlichungstag der Anmeldung: **22.10.1997**
(21) Anmeldenummer: 97106281.5
(22) Anmeldetag: 16.04.1997
(51) Int. Cl.: B01F 13/10, B01F 7/08, B02C 19/22, C05F 9/02

(54) **Vorrichtung zur Aufbereitung von Bioabfall**

(30) Priorität: 19.04.1996 DE 19615662
(71) Anmelder: Heissenberger & Pretzler Ges.m.b.H., 8020 Graz (AT)
(72) Erfinder: Heissenberger, Josef, Ing., 8045 Graz (AT); Pretzler, Rudolf, Dupl.-Ing., 8600 Bruck/Mur (AT)
(74) Vertreter: Laufhütte, Dieter, Dr.-Ing.

(57) **Zusammenfassung**

Die Erfindung betrifft eine Vorrichtung zur Aufbereitung von Bioabfall mit mehreren als Schnecken ausgebildeten Homogenisierungswerkzeugen, die am Umfang austauschbare Schneidmesser aufweisen, wobei zumindest ein Teil der Schnecken über einen Teilbereich ihres Umfanges von einer Wanne umgeben ist. Zur Lösung der Aufgabe, diese Vorrichtung derart weiterzubilden, daß auch Früchte, wie beispielsweise Zitrusfrüchte, oder Knollen und Gemüse sicher zerkleinert werden, sind die Schneidmesser derart geformt, daß sich der Abstand zwischen der umgebenden Wanne und der Schneidmesserkante verändert.

## Beschreibung

Die Erfindung betrifft eine Vorrichtung zur Aufbereitung von Bioabfall mit mehreren als Schnecken ausgebildeten Homogenisierungswerkzeugen, die am Umfang austauschbare Schneidmesser aufweisen, wobei zumindest ein Teil der Schnecken über einen Teilbereich ihres Umfanges von einer Wanne umgeben ist.

Bei der Aufbereitung von Bioabfall ist darauf zu achten, daß aerobe Rottesysteme nach einem homogenisierten Eingabematerial verlangen. In der Regel wird Bioabfall mit ca. 20 Gewichtsprozent Strukturmaterial und wenigen Gewichtsprozent Reifkompost vermischt. Häufig wird auch noch ein Anteil von Gesteinsmehl und ein geringer Anteil von Brandkalk zugesetzt. Die Aufgabe einer Vorrichtung zur Aufbereitung von Bioabfall ist es nun, diesen inhomogenen Abfall zu zerkleinern und mit den Zusätzen gut zu vermischen. Zur entsprechenden Aufbereitung von Bioabfall sind bereits gattungsgemäße Vorrichtungen bekannt, bei denen die mit austauschbaren Zeitmessern versehenen Schnecken derart einander zugeordnet sind, daß die eingegebenen Komponenten zwischen den Schnecken im Kreislauf geführt werden und dadurch intensiv zerkleinert und homogenisiert werden.

Bei diesen Systemen ergeben sich immer wieder Probleme durch nicht aufgeschlossene Früchte, Gemüse oder aber feuchte Verdichtungen im Material, die den Rotteprozeß verzögern und aufgrund lokaler anaerober Stellen zu unangenehmen Geruchsemissionen führen.

Aufgabe der Erfindung ist es, eine gattungsgemäße Vorrichtung derart weiterzubilden, daß auch Früchte, wie beispielsweise Zitrusfrüchte oder Knollen und Gemüse sicher zerkleinert werden.

Ausgehend von einer gattungsgemäßen Vorrichtung wird diese Aufgabe dadurch gelöst, daß die Schneidmesser, die am Umfang der Schnecken angeordnet sind, derart geformt sind, daß sich der Abstand zwischen der umgebenden Wanne und der Schneidmesserkante verändert. Dabei sind die Schneidmesserkanten vorteilhaft derart ausgebildet, daß sich der Abstand von der umgebenden Wanne zur Schneidmesserkante vom äußeren Rand des Schneidmessers zu seiner Mitte hin verringert und zur entgegengesetzten äußeren Kante wieder vergrößert. Der geringste Abstand ist dabei kleiner gewählt als der Durchmesser von üblichen zu verarbeitenden Früchten oder Gemüsen, so daß hier ein sicheres Aufschließen der Früchte, Knollen oder Gemüse erreicht wird. Durch die erfindungsgemäße Formgebung wird nun die beispielsweise zu zerkleinernde Frucht erfaßt und aufgrund der Abnahme des Abstandes zwischen Messerkante und umliegender Wanne sicher zerkleinert.

Gemäß einer vorteilhaften Ausbildungsform der Erfindung bestehen die Schneckengänge der Schnecken aus gegeneinander abgekanteten ebenen Flächenelementen. Hier sind also die kontinuierlich gebogenen Schneckengänge durch abgekantete Flächenelemente ersetzt. Hierdurch können an den sich durch diese Ausbildung ergebenden ebenen Flächen verschiedene gewünschte Elemente, wie beispielsweise Schneidmesser, angeordnet werden.

Gemäß einer besonders vorteilhaften Ausgestaltung können die Schneidmesser federnd mit ebenen Flächenelementen der Schneckengänge verbunden sein. Dabei ist die Federung so vorgesehen, daß die Schneidmesserkante bei Auftreten eines entsprechend großen Widerstandes zurückfedern kann. Hierdurch wird eine Beschädigung der Schneidmesser durch feste Gegenstände im zu homogenisierenden Gut, beispielsweise Steine, sicher verhindert. Das entsprechende Schneidmesser kann nämlich bei Auftreten eines entsprechend hohen Widerstandes durch einen Stein oder dergleichen zurückfedern.

Die Vorrichtung zur Aufbereitung des Bioabfalls kann beispielsweise aus vier Schnecken bestehen, von denen zwei parallel nebeneinander angeordnete Schnecken, die in Schwerkraftrichtung unter den anderen beiden Schnecken angeordnet sind, über einen Teil ihres Umfangs konzentrisch von Wannen umgeben sind. Dabei sind die Wannen vorteilhaft unterhalb der Schnecken angeordnet.

Die Schnecken können jeweils auch radial wirkende Transportschaufeln aufweisen, die zur Weiterförderung des von den Schnecken transportierten Materials an benachbarte Schnecken dient. Hierdurch wird das zu homogenisierende Gut zwischen den Schnecken in Kreislauf geführt. Zum Ausschleusen des fertig vermischten Materials kann neben einer der radial wirkenden Transportschaufeln eine verschließbare Auswurföffnung angeordnet sein, die nur für den Fall, daß das fertig gemischte Material ausgeworfen werden soll, gesteuert geöffnet werden kann.

Gemäß einer vorteilhaften Ausgestaltung der Erfindung können in der Wanne Verschleißsegmente einschraubbar sein. Die Wanne kann dicht verschweißt sein, so daß sie absolut dicht bleibt. Die Verschleißelemente können auch nur eingeklemmt sein, so daß keine Schraubbohrungen notwendig sind. Die Verschleißsegmente können sehr einfach ausgewechselt werden. Auf den derartig gebildeten Verschleißböden können beliebige zusätzliche Werkzeuge aufgeschweißt sein, wie beispielsweise Schleißleisten. Teilbereiche, welche dem Verschleiß stärker ausgesetzt sind, können öfters gewechselt werden.

Zusätzlich zu der erfindungsgemäßen Ausformung der Schneidmesser derart, daß sich der Abstand zwischen der umgebenden Wanne und der Schneidmesserkante verändert, können die entsprechenden Messerkanten noch mit groben Zähnen versehen sein. Hierdurch wird die Zerkleinerungswirkung noch verbessert.

Weitere Einzelheiten und Vorteile der Erfindung ergeben sich aus einem in der Zeichnung dargestellten Ausführungsbeispiel. Es zeigen:
- Fig. 1:: eine Seitenansicht, teilweise geschnitten, einer Ausführungsform der erfindungsgemäßen Vorrichtung,
- Fig. 2:: eine Draufsicht von oben auf die erfindungsgemäße Vorrichtung gemäß Fig. 1,
- Fig. 3:: eine Rückansicht der Vorrichtung gemäß Fig. 4,
- Fig. 4:: eine Vorderansicht der Vorrichtung gemäß Fig. 1 und
- Fig. 5:: ein Detail einer Schnecke der Vorrichtung gemäß Fig. 1.

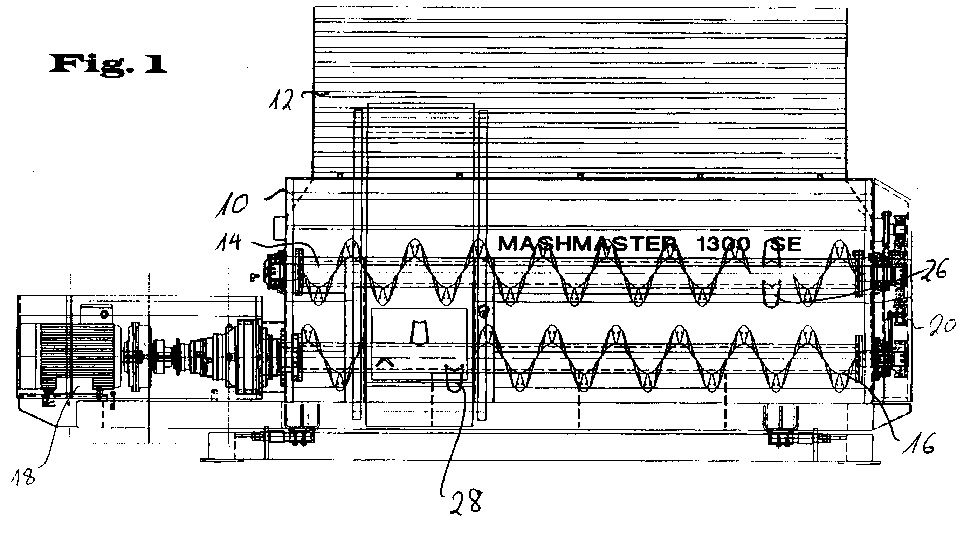

Die Vorrichtung zur Aufbereitung von Bioabfall besteht, wie in Fig. 1 dargestellt, im wesentlichen aus einem Gehäuse 10 mit einem Einschüttbereich für das zu homogenisierende Material 12 und vier drehbar in dem Gehäuse 10 gelagerten Schnecken 14, 16.

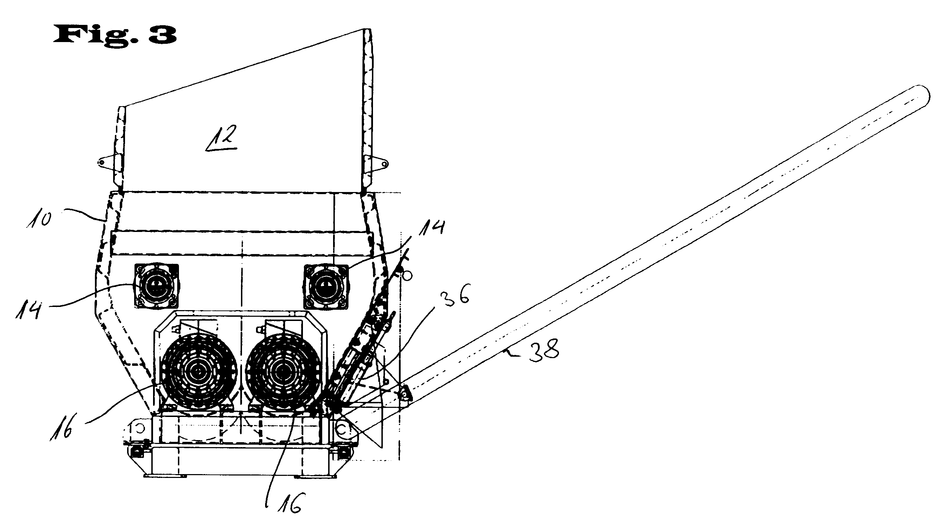

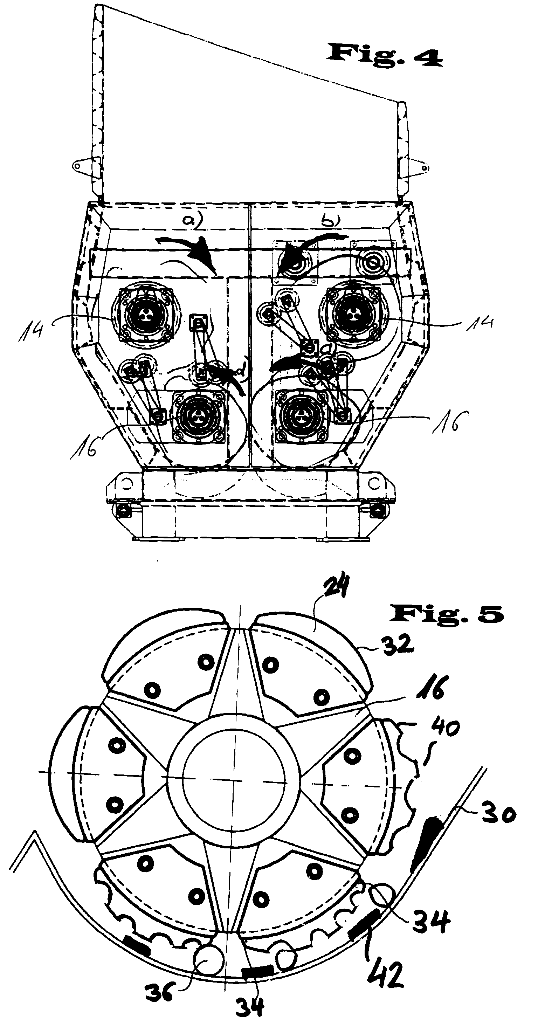

Wie aus der Fig. 3 ersichtlich, sind zwei obere Schnecken 14 und zwei untere Schnecken 16 vorgesehen. Die unteren Schnecken 16 werden über Elektromotoren 18 angetrieben. Die Antriebskraft wird über ein Getriebe 20 auch auf die oberen Schnecken 14 übertragen. Aus Fig. 4 sind die Drehrichtungen der Schnecken ersichtlich. Die oberen Schnecken 14 drehen sich in Pfeilrichtung a bzw. Pfeilrichtung b, d.h. gegensinnig, während sich die unteren Schnecken 16 in Pfeilrichtung c bzw. d, also gleichsinnig bewegen.

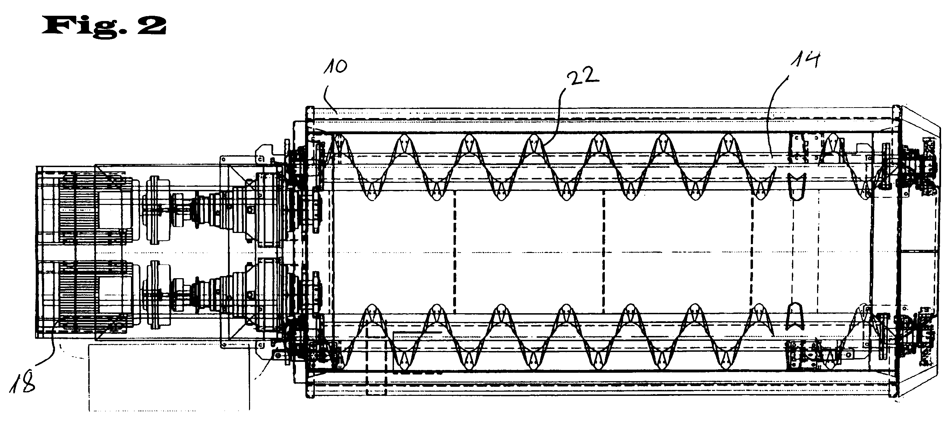

Die auf den Schnecken 14 und 16 ausgebildeten Schneckengänge 22 sind aus gegeneinander abgekanteten ebenen Flächenelementen gebildet, auf die in den Fig. 1-4 nicht näher dargestellte Art und Weise Werkzeuge, beispielsweise Schraubmesser aufgeschraubt sind. Entsprechend aufgeschraubte Schneidmesser 24 sind beispielsweise aus der Fig. 5 ersichtlich, worauf in Folge noch näher eingegangen werden wird. Die Schnecken 14 und 16 tragen neben den Schneckengängen noch radial wirkende Transportschaufeln 26 und 28. Die Schneckengänge sind so angeordnet, daß das Material jeweils axial zu den Transportschaufeln hin transportiert wird. Die radial wirkenden Transportschaufeln 26 und 28 übergeben das Material an die benachbarten Schnecken, so daß dieses über eine gewünschte Zeit im Kreislauf geführt wird, wobei es durch die Schnecken entsprechend zerkleinert und homogenisiert wird.

Die unteren Schnecken 16 sind, wie insbesondere der Fig. 5 zu entnehmen ist, über einen Teil ihres Umfangs konzentrisch von einer Wanne 30 umgeben. Hierdurch kann das zwischen der Oberfläche der Wanne 30 und den Kanten 32 der Schneidmesser 24 gelangende zu homogenisierende Gut zerrieben und zerfasert werden. Die Schneidkanten 32 und das Schneidmesser 24 sind im Verhältnis zur umgebenden Wanne 30 nun so gebildet, daß sie von ihren äußeren Kanten 34 zur Mitte stetig den Abstand zur umgebenden Wanne 30 verringern. Hierdurch kann, wie in Fig. 5 dargestellt, beispielsweise eine Zitrusfrucht 36 im äußeren Kantenbereich 34 auch erfaßt und durch die stetige Abstandsverringerung aufgrund der Kantenformung der Schneidkante 32 sicher zerteilt werden. Besonders vorteilhaft sind die Schneidmesser 24 in hier nicht näher dargestellter Art und Weise derart federnd gelagert, daß sie bei Erfassen eines Steins oder sonstigen nicht zerkleinerbaren Gegenstandes gegen die Federkraft ausgelenkt werden und somit nicht beschädigt werden.

Die Schneidkanten 32 der Schneidmesser 24 können mit groben Zähnen 40 versehen sein. Diese unterstützen die Zerkleinerungswirkung.

Auf der Wanne sind Verschleißsegmente bzw. Verschleißelemente 42 aufgebracht, die in leicht auswechselbarer Art und Weise lediglich eingeklemmt sind.

Aus Fig. 3 ist der aufsteuerbare Verschluß 36 ersichtlich, der im Bereich der Transportschaufeln 28 liegt. Nach Aufsteuern des Verschlusses 36 wird das homogenisierte Material durch die entsprechende Auswurföffnung mittels der Transportschaufeln 28 ausgetragen und auf ein Förderband 38 abgelegt.

Mittels der hier vorgestellten Vorrichtung kann nicht nur eine homogene Mischung des zu homogenisierenden Materials erreicht werden. Vielmehr kann sichergestellt werden, daß auch Früchte, wie beispielsweise Zitrusfrüchte, Knollen oder auch Gemüse sicher zerkleinert und zerfasert werden, so daß die Gefahr von in der Rotte auftretenden Fäulnisherden minimiert werden kann.

## Patentansprüche

1. Vorrichtung zur Aufbereitung von Bioabfall mit mehreren als Schnecken ausgebildeten Homogenisierungswerkzeugen, die am Umfang austauschbare Schneidmesser aufweisen, wobei zumindest ein Teil der Schnecken über einen Teilbereich ihres Umfanges von einer Wanne umgeben ist,
**dadurch gekennzeichnet**,
daß die Schneidmesser derart geformt sind, daß sich der Abstand zwischen der umgebenden Wanne und der Schneidmesserkante verändert.

2. Vorrichtung nach Anspruch 1, dadurch gekennzeichnet, daß die Schneckengänge der Schnecke aus gegeneinander abgekanteten ebenen Flächenelementen gebildet sind.

3. Vorrichtung nach Anspruch 2, dadurch gekennzeichnet, daß die Schneidmesser an den ebenen Flächenelementen des Schneckenganges befestigt sind.

4. Vorrichtung nach Anspruch 3, dadurch gekennzeichnet, daß die Schneidmesser federnd mit den ebenen Flächenelementen der Schneckengänge verbunden sind.

5. Vorrichtung nach einem der Ansprüche 1-4, dadurch gekennzeichnet, daß sie vier Schnecken aufweist, von denen zwei parallel nebeneinander angeordnete Schnecken, die in Schwerkraftrichtung unter den anderen beiden Schnecken angeordnet sind, von Wannen umgeben sind.

6. Vorrichtung nach einem der Ansprüche 1-5, dadurch gekennzeichnet, daß auf den Schnecken jeweils auch radial wirkende Transportschaufeln angeordnet sind, die zur Weiterförderung des von den Schnecken transportieren Materials an eine benachbarte Schnecke dient.

7. Vorrichtung nach Anspruch 6, dadurch gekennzeichnet, daß neben einer der radial wirkenden Transportschaufeln eine verschließbare Auswurföffnung angeordnet ist, die nur für den Fall, daß das fertig gemischte Material ausgeworfen werden soll, gesteuert geöffnet werden kann.

8. Vorrichtung nach einem der Ansprüche 1 bis 7, dadurch gekennzeichnet, daß auf dem Wannenboden Verschleißsegmente aufgebracht sind.

9. Vorrichtung nach einem der Ansprüche 1 bis 8, dadurch gekennzeichnet, daß die Schneidmesser entlang ihrer Messerkante grobe Zähne aufweisen.
